(19) Europäisches Patentamt
European Patent Office
Office européen des brevets

(11) **EP 2 448 141 A2**

(12) **EUROPEAN PATENT APPLICATION**
published in accordance with Art. 153(4) EPC

(43) Date of publication:
**02.05.2012 Bulletin 2012/18**

(51) Int Cl.:
**H04B 7/04** (2006.01)     **H04B 7/005** (2006.01)

(21) Application number: **10792350.0**

(22) Date of filing: **24.06.2010**

(86) International application number:
**PCT/KR2010/004123**

(87) International publication number:
**WO 2010/151068 (29.12.2010 Gazette 2010/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.06.2009 KR 20090056710**

(71) Applicant: **Pantech Co., Ltd.**
**Seoul 121-270 (KR)**

(72) Inventors:
• **SUH, Sung-jin**
**Seoul 121-270 (KR)**
• **PARK, Kyoungmin**
**Seoul 121-270 (KR)**

(74) Representative: **Jordan, Volker Otto Wilhelm et al**
**Weickmann & Weickmann**
**Patentanwälte**
**Postfach 860 820**
**81635 München (DE)**

(54) **METHOD FOR COMPENSATING FOR FREQUENCY ATTENUATION USING ADAPTIVE CYCLIC DELAY DIVERSITY, AND TRANSMITTING APPARATUS AND METHOD AND RECEIVING APPARATUS AND METHOD USING SAME**

(57)     The present invention provides a coordinated multipoint transmitting/receiving method using adaptive cyclic delay diversity, a system side apparatus and a receiving apparatus using same, and a method for determining a coordinated base station set, which improve channel performance for a specific frequency band of a specific base station, which requires a coordinated multipoint transmission/reception system (CoMP) using an adaptive cyclic delay diversity (CDD), to thereby enable the relevant base station to be included in the coordinated base station set.

*FIG.5*

**Description**

Technical Field

The present invention relates to a method for compensating for frequency attenuation using adaptive cyclic delay diversity, and a transmitting apparatus and method and a receiving apparatus and method using the same.

More particularly, the present invention relates to a technology, in which a receiving side feeds back information on an antenna to be delayed and an adaptive CDD delay value for the antenna to a transmitting side, and the transmitting side performs a cyclic delay transmission based on the provided cyclic delay value, so as to improve the reception frequency response characteristics.

Background Art

A signal transmission using a Multi-Input Multi-Output (MIMO) antenna may be problematic in that it may cause a receiver to show a very low frequency response in some bands, which reduces the bandwidth that can be used by the system and may make it difficult to achieve an efficient use of resources and a high speed transmission of information.

In order to solve such a problem, various schemes are taken into consideration, which include a Cyclic Delay Diversity (hereinafter, referred to as "CDD") scheme.

The CDD scheme refers to a diversity technique used in on an OFDM based wireless communication system, which converts a spatial diversity to a frequency diversity in order to avoid inter-symbol interference.

According to the CDD scheme, in the case of transmitting a signal through a multi-path delay channel in an OFDM system using a plurality of transmission antennas, the signal of each antenna is transmitted with a delay as long as a cyclic delay value. By increasing the frequency selective characteristic of the channel through the CDD scheme, it is possible to improve the coding gain through a channel coding technique.

That is, in the CDD scheme, when N antennas transmit the same signal, the first antenna transmits the original signal without any change and the second to the N$^{th}$ antennas sequentially transmit the signal with a predetermined delay value, so as to artificially generate a cyclic delay, thereby improving the frequency selective characteristic of a channel.

Although the use of the CDD scheme can improve the general frequency selectiveness of a channel and thus can obtain the processing gain through the channel coding, this does not correspond to an improvement of a channel frequency response of a particular band but corresponds to just an increase of the processing gain of the channel coding over the entire channel.

However, as the communication systems become complicated and coordinated techniques, such as CoMP (Coordinated multi-point) and relay, appear, more active discussion than before is being made on a solution for an efficient use of frequency resources. At this point, there is an urgent need for a method capable of obtaining a processing gain by improving a response characteristic of a particular frequency band required by a user instead of the entire channel.

Disclosure

Technical Problem

Therefore, the present invention has been made in view of the above-mentioned problems, and the present invention provides an apparatus and a method for compensating for frequency attenuation in a particular frequency band in a MIMO antenna system.

Also, the present invention provides an apparatus and a method, which enable a transmitter to set and use a proper cyclic delay value by using channel information, so as to provide a frequency selectivity to an entire channel and thus improve frequency response characteristics, and to compensate for a deep frequency attenuation, which may occur in a particular frequency band.

Moreover, the present invention provides an apparatus and a method, which enable a receiver to calculate an adaptive cyclic delay value and feed back the calculated adaptive cyclic delay value to the receiver, so as to compensate for a frequency attenuation, which may occur in a particular frequency band in a MIMO antenna system.

In addition, the present invention provides an apparatus and a method, in which a receiving side selects an antenna, to which a cyclic delay is to be applied, based on phase differences between multiple transmitting antennas, calculates an optimum adaptive cyclic delay value, and provides the calculated adaptive cyclic delay value to a transmitting side, and the transmitting side performs a cyclic delay transmission based on the provided cyclic delay value, so that it is possible to compensate for a frequency attenuation in a desired frequency band.

Technical solution

In accordance with an aspect of the present invention, there is provided a receiving apparatus for compensating for frequency attenuation in a particular band, the receiving apparatus including a feedback information processor, wherein the feedback information processor includes: a first section for estimating a reference signal transmitted by each antenna, and calculating a phase difference between signals; a second section for searching for a particular frequency band enabling compensation for frequency attenuation through correction of a phase difference; a third section for selecting an antenna to be delayed which enables the compensation for the frequency attenuation in the particular frequency band; a fourth section for calculating an adaptive cyclic delay value by using information on the particular found frequency band; and a fifth section for generating a feedback signal including the calculated adaptive cyclic delay value and information on an antenna to be delayed, and transmitting the generated feedback signal to a transmitting apparatus.

In accordance with another aspect of the present invention, there is provided a transmitting apparatus including a multi-transmission antenna compensating for frequency attenuation in a particular frequency band, the transmitting apparatus including a cyclic delay controller for controlling the antenna to be delayed so as to transmit a signal delayed by the adaptive cyclic delay value, wherein the cyclic delay controller controls the antenna to be delayed by receiving an adaptive cyclic delay value, calculated based on a phase difference between signals from antennas and information on a particular frequency band enabling compensation for frequency attenuation and information on the antenna to be delayed, and then transmitting a signal delayed by the adaptive cyclic delay value.

In accordance with another aspect of the present invention, there is provided a method for compensating for frequency attenuation in a particular frequency band by a receiving apparatus in a multi-transmission antenna system, the method including: estimating a reference signal transmitted by each antenna, and calculating a phase difference between signals; searching for a particular frequency band which enables compensation for frequency attenuation through correction of a phase difference; selecting an antenna to be delayed which enables compensation for frequency attenuation in the particular frequency band; calculating an adaptive cyclic delay value by using the particular found frequency band and the estimated reference signal; transmitting the calculated adaptive cyclic delay value and information on the antenna to be delayed to a transmitting apparatus; and receiving a signal delayed by the adaptive cyclic delay value with respect to the antenna to be delayed from the transmitting apparatus.

In accordance with another aspect of the present invention, there is provided a method for compensating for frequency attenuation in a particular frequency band by a transmitting apparatus in a multi-transmission antenna system, the method including: receiving, from a receiving apparatus, an adaptive cyclic delay value calculated based on a phase difference between signals from antennas and information on a particular frequency band which enables compensation for frequency attenuation, and information on an antenna to be delayed; and controlling the antenna to be delayed by using the received adaptive cyclic delay value and information on the antenna to be delayed so as to transmit a signal delayed by the adaptive cyclic delay value.

In accordance with another aspect of the present invention, there is provided a method for receiving a signal, the method including: feeding back information on phase differences between received signals of multi-antenna, information on an antenna to be delayed, which is selected based on the information on the phase differences, information on a particular frequency band requiring a compensation for frequency attenuation, and a cyclic delay value calculated from the information on the particular frequency band to a transmitting side; and receiving a signal delayed by the cyclic delay value from the antenna to be delayed.

In accordance with another aspect of the present invention, there is provided a method for transmitting a signal, the method including: receiving information on phase differences between received signals of multi-antenna, information on an antenna to be delayed, which is selected based on the information on the phase differences, information on a particular frequency band requiring a compensation for frequency attenuation, and a cyclic delay value calculated from the information on the particular frequency band, which are fed back from a receiving side; and transmitting a signal with the cyclic delay value by the antenna to be delayed.

Brief Description of the Drawings

The foregoing and other objects, features and advantages of the present invention will become more apparent from the following detailed description when taken in conjunction with the accompanying drawings in which:

FIG. 1 is a block diagram illustrating the configuration of a 3X1 multi-transmission/reception antenna (MIMO) system using a Cyclic Delay Diversity (CDD) technique;
FIG. 2A is a view illustrating the channel response characteristics of a MIMO system which does not use the CDD, and FIG. 2B is a view illustrating channel response characteristics of a MIMO system using a large delay CDD;
FIG. 3 is a block diagram illustrating a configuration of a transmitting apparatus according to an embodiment of the present invention;
FIG. 4 is a block diagram illustrating a configuration of a receiving apparatus according to an embodiment of the present invention;
FIG. 5 is a flowchart illustrating a method for compensating for frequency attenuation for a particular frequency band by using a multi transmission antenna system according to an embodiment of the present invention; and
FIGs. 6 to 8 are views illustrating changes in channel response characteristics of a multi-antenna system according to an embodiment of the present invention.

Best Mode

Mode for Invention

Hereinafter, exemplary embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, a third component may be "connected," "coupled," and "joined" between the first and second components, although the first component may be directly connected, coupled or joined to the second component.

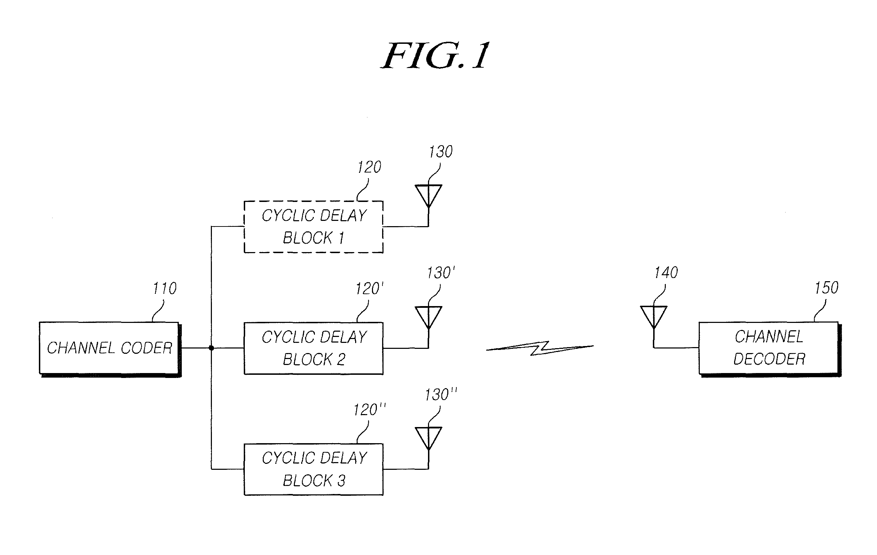

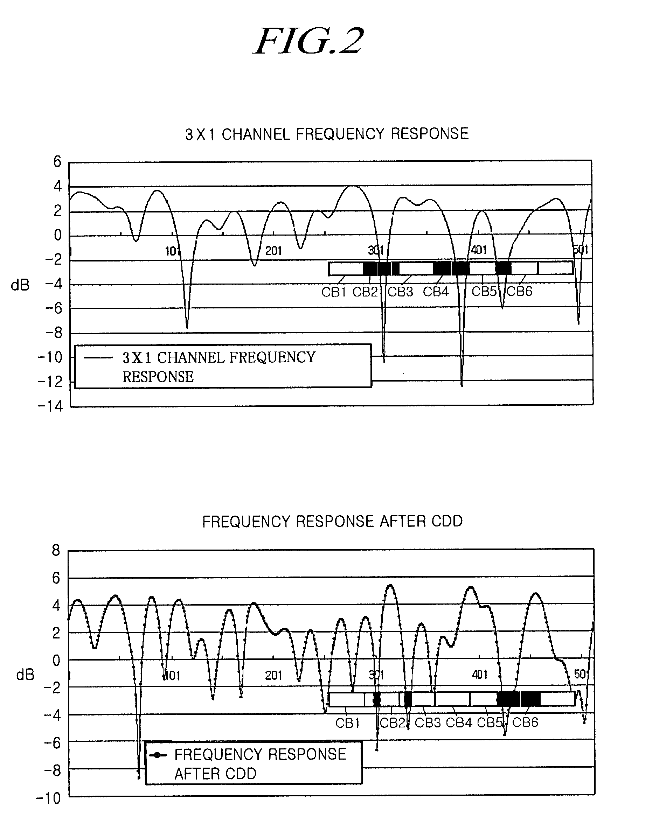

FIG. 1 is a block diagram illustrating the configuration of a 3X1 multi-transmission/reception antenna (MIMO) system using a Cyclic Delay Diversity (CDD) technique, FIG. 2A is a view illustrating the channel response characteristics of a MIMO system which does not use the CDD, and FIG. 2B is a view illustrating channel response characteristics of a MIMO system using a large delay CDD.

Referring to FIG. 1, a 3X1 CDD MIMO system includes a transmitter, which includes a channel coder 110, multiple cyclic delay blocks 120, 120' and 120", and multiple antennas 130, 130' and 130", and a receiver which includes an antenna 140 and a channel decoder 150.

For reference, in a typical CDD, delay is not applied to a first antenna, so that a cyclic delay block 120 connected to a first antenna 130 shown in FIG. 1 may be omitted.

As noted from FIG. 2A illustrating the channel response characteristics of a signal transmitted without using the CDD in the 3X1 CDD MIMO system as illustrated in FIG. 1, it is impossible to recover information in multiple code blocks from the viewpoint of the Code Block (CB)for channel coding (i.e. when channel coding is performed on a code block-by-code block basis).

In FIG. 2, a heavily shaded part represents a part where information is corrupted due to a frequency selective fading phenomenon. A code block including a heavily shaded part and a white part represents a code block in which information is successfully recovered after channel coding although some of the information has been corrupted. Also, a code block including a heavily shaded part and a lightly shaded part represents a code block in which information fails to be recovered even after channel coding because much of the information is corrupted.

When the CDD is not used as shown in FIG. 2A, there are code blocks, such as CB5 and CB6, in which information can be recovered after channel coding although information over some period has been corrupted. On the other hand, there are some code blocks, such as CB2 and CB4, in which large corrupted parts are included and thus information cannot be recovered at all. For reference, when there occurs frequency attenuation, the value of which is equal to or smaller than -2dB, it was assumed that information failed to be recovered.

In a large delay CDD, a large delay value corresponding to a sample value of tens to hundreds is set as a cyclic delay value. Then, the first antenna transmits the original signal as it is, the second antenna and the third antenna transmit the signal with a cyclic delay. The frequency response characteristics in the case of using a large delay CDD are as shown in FIG. 2B.

It is noted that a change in a channel response becomes larger when the large delay CDD is applied as shown in FIG. 2B than when the large delay CDD is not applied as shown in FIG. 2A. Namely, the larger a cyclic delay value becomes, the larger the change in frequency selectivity becomes.

When the channel selectivity increases as shown in FIG. 2B, the overall channel response is reduced. On the other hand, as the width of frequency attenuation becomes smaller, it is possible to obtain the gain of channel coding. Therefore, when the CDD is not applied (FIG. 2A), even a code block in which a large frequency attenuation prevents information from being recovered by channel coding, has a higher probability of recovering the information by channel coding as shown in FIG. 2B in a channel to which the large delay CDD applies the frequency selectivity.

Namely, in FIG. 2A, it is impossible to recover information in two code blocks CB2 and CB4. In contrast, it is impossible to recover information in only one code block CB6 in FIG. 2B where the large delay CDD is used. Accordingly, the probability of recovering information becomes larger (in the second code block, the third code block, and the fifth code block CB2, CB3 and CB5, some of information has been corrupted, but is recovered by channel coding).

When the large delay CDD is used as described above, the large delay CDD improves the overall frequency selectivity of a channel, and makes it possible to obtain a processing gain due to channel coding. However, the large delay CDD does not improve a channel frequency response in a particular band, but can only increase the processing gain of channel coding over the entire channel. Therefore, the large delay CDD is a scheme having limits to some degree.

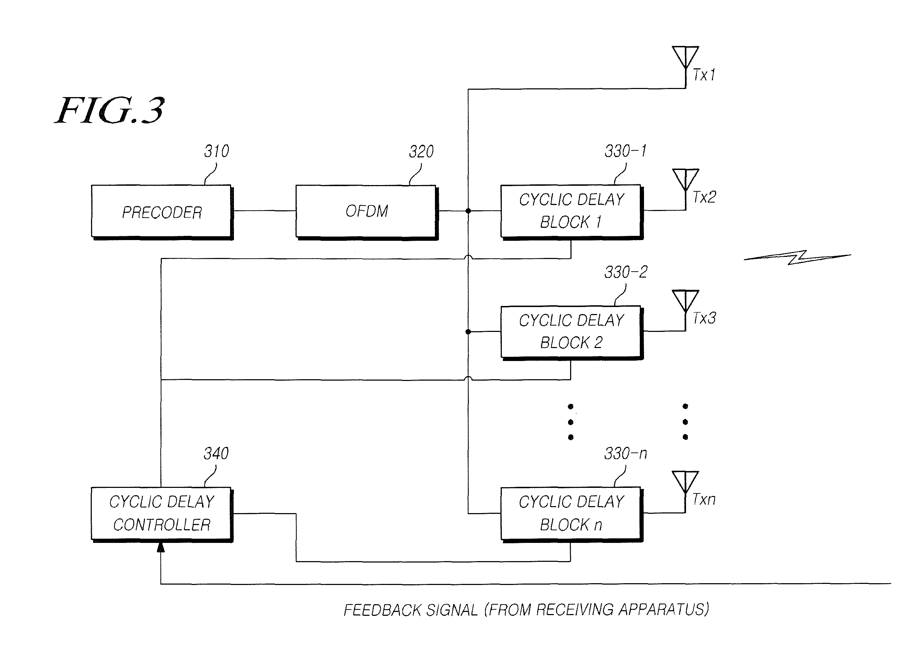

FIG. 3 is a block diagram illustrating a configuration of a transmitting apparatus according to an embodiment of the present invention.

Referring to FIG. 3, a transmitting apparatus according to an embodiment of the present invention includes a precoder 310, an Orthogonal Frequency Division Multiplexing (OFDM) modulator 320, an N number of antennas Tx1 to TxN arranged after the OFDM modulator, cyclic delay blocks 330-1 to 330-n capable of applying cyclic delay values to the remaining antennas excluding the first antenna Tx1, respectively, and a cyclic delay controller 340 capable of controlling all of the cyclic delay blocks.

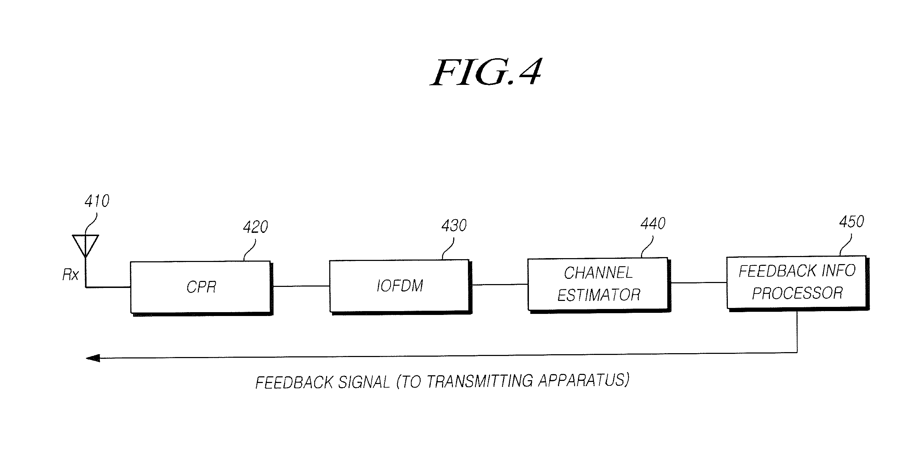

The cyclic delay controller 340 according to an embodiment of the present invention performs a function of receiving information on an antenna to be delayed and an adaptive cyclic delay value related to the antenna which have been fed back from the receiving apparatus, and then controlling the antenna to be delayed so as to make the antenna transmit a signal delayed by an adaptive cyclic delay value to the receiving apparatus. A detailed configuration of the cyclic delay controller 340 will be described again below with reference to FIG. 4 to FIG. 6.

Although the precoder 310 may include an FEC (Forward Error Correction) encoder, an interleaver, and a symbol mapper, the present invention is not limited to this configuration. Therefore, the precoder 310 should be understood as the concept of including all elements for processing signals before the modulation.

In this specification, although it is desirable that a transmitting apparatus and a receiving apparatus correspond to a base station (or a Node B, an eNode B, or the like) and a User Equipment (UE) in a downlink, respectively, the present invention is not limited to this configuration and roles of the elements may change in an uplink or the like. In an embodiment of the present invention, all apparatuses, which perform a function of calculating a phase difference between received signals and selecting a particular frequency band for compensating for attenuation, and calculating an adaptive cyclic delay value and transmitting the calculated adaptive cyclic delay value, will be commonly called "receiving apparatuses." Also, all apparatuses, which receive a fed-back feedback signal and perform signal delay transmission according to an adaptive cyclic delay value, will be commonly called "transmitting apparatuses."

FIG. 4 is a block diagram illustrating the configuration of a receiving apparatus according to an embodiment of the present invention.

Referring to FIG. 4, a receiving apparatus according to an embodiment of the present invention includes at least one antenna (Rx) 410, a Cyclic Prefix Remover (CPR) 420, an OFDM demodulator 430 for performing an Inverse Orthogonal Frequency Division Multiplexing (IOFDM) scheme, a channel estimator 440, and a feedback information processor 450.

The channel estimator 440 first estimates a channel by using a Reference Signal (RS) received through the antenna, and then detects channel conditions in each band. Because the channel conditions in each band change with time, the channel estimator 440 continuously estimates a channel by predetermined time periods by using a reference signal.

The feedback information processor 450 according to an embodiment of the present invention includes: a first section for estimating a reference signal transmitted by each antenna simultaneously with the estimation of a channel and calculating a phase difference between signals; a second section for searching for a particular frequency band which enables compensation for frequency attenuation through the correction of a phase difference; a third section for selecting an antenna to be delayed capable of compensating for frequency attenuation in a particular frequency band; a fourth section for calculating an adaptive cyclic delay value by using information on the particular found frequency band; and a fifth section for transmitting a feedback signal including the calculated adaptive cyclic delay value and information on the antenna to be delayed to the system side apparatus 410.

In this specification, a section has the concept of including all types of software or hardware configurations for performing a relevant function, and is not limited to a particular form of implementation. According to circumstances, the feedback information processor according to an embodiment of the present invention may be implemented as a separate element, or may be implemented by integrating the feedback information processor with another element such as the channel estimator or the like. Otherwise, the feedback information processor may operate in connection with a separate transmission antenna and the like in order to transmit a feedback signal.

The number of the antennas to be delayed as described above may be determined to be singular or plural. The second section selects, as the particular frequency band, a domain where an absolute value of a phase difference between signals transmitted by any two antennas is equal to or larger than a particular threshold and simultaneously, frequency attenuation is large.

The closer the particular threshold is to π (3.14) or -π (-3.14), the larger a compensation effect becomes. For example, it is desirable that the particular threshold has a value equal to or larger than $0.8\pi$. However, the particular threshold does not need to be limited to a particular range, and may be appropriately determined to have a value (e.g. $6/7^{\times\pi}$, $5/6^{\times\pi}$, $3/4^{\times\pi}$, or the like) according to the degree of necessity of compensation for frequency attenuation.

Also, although a criterion of a domain where frequency attenuation is large, for example, may be a case when there occurs frequency attenuation, the value of which is equal to or smaller than -2 dB, or the like, the present invention is not limited to this example. The criterion may be variably set according to the characteristics of a channel intended to be used.

Also, the fourth section of the feedback information processor determines an adaptive cyclic delay value in such a manner as to minimize a phase difference between signals transmitted by an antenna to be delayed and a reference antenna in a particular selected frequency band. Specifically, it is desirable that adaptive cyclic delay value $\delta_{cyc,n}$ is determined by equation (1) below.

$$\delta_{cyc,n} = (2m\Pi + \Theta_k(d)) \times N_{FFT} / 2\Pi k \qquad \ldots \ldots \quad (1)$$

In equation (1), n represents a number of an antenna to be delayed, k represents an index of a particular frequency band, $N_{FFT}$ represents the number of sub-carriers, $\Theta_k(d)$ represents a phase difference value for which compensation is desired, and m represents an optional integer.

Also, because adaptive cyclic delay value $\delta_{cyc,n}$ is a cyclic delay value, adaptive cyclic delay value $\delta_{cyc,n}$ is not determined as one value, and may be determined as multiple values by integer m as defined by equation (1). However, the larger adaptive cyclic delay value $\delta_{cyc,n}$ becomes, the larger the number of poles generated in a frequency response becomes, so that it becomes difficult to perform as significant a compensation for response attenuation in a particular frequency band as does the large delay CDD as described above. Therefore, an appropriately small value is selected from among obtained adaptive cyclic delay values $\delta_{cyc,n.}$ Although it is desirable that integer m becomes zero and the smallest value among multiple adaptive cyclic delay value candidates is determined as an adaptive cyclic delay value, the present invention is not limited to this example.

In equation (1), a phase shift in band k caused by $\delta_{cyc,n}$ becomes, phase difference value $\Theta_k(d)$ for which compensation is desired. Accordingly, it is desirable and ideal that phase difference value $\Theta_k(d)$ becomes π (3.14) or -π (-3.14) which is a phase difference which enables the most significant compensation. However, an actual phase difference between two antenna signals, which is to be used for the application of an actual compensation may not have the exact π (3.14) or -π (-3.14). In this case, an actual phase difference value between two antenna signals, which is to be used for the application of compensation, is determined as phase difference value $\Theta_k(d)$ for which compensation is desired.

Also, adaptive cyclic delay value $\delta_{cyc,n}$ is a sampled number, and thus must be an integer. In equation (1), when phase difference value $\Theta_k(d)$ for which compensation is desired becomes an actual phase difference value between two antenna signals, which is to be used for the application of compensation, it is possible that adaptive cyclic delay value $\delta_{cyc,n}$ will not become an integer. In this case, phase difference value $\Theta_k(d)$ for which compensation is desired, is a value which enables adaptive cyclic delay value $\delta_{yny,n}$ to become an integer as defined by equation (1). Therefore, it is desirable that phase difference value $\Theta_k(d)$ for which compensation is desired, is determined as a closest value to an actual phase difference value between two antenna signals, which is used for the application of an actual compensation.

As described above, the feedback information processor generates a feedback signal including the calculated adaptive cyclic delay value and information on a selected antenna to be delayed, and transmits the generated feedback signal to the transmitting apparatus, the cyclic delay controller 350 of the transmitting apparatus shown in FIG. 3 controls a cyclic delay block of a relevant antenna to be delayed, so as to cause the antenna to be delayed to transmit a signal (which is to be represented by equation (3) below) delayed by an adaptive cyclic delay value as compared with a reference antenna signal.

In this specification, the receiving apparatus may be a User Equipment (UE), and such a UE has a comprehensive concept implying a user terminal in wireless communication as described above. Accordingly, it should be analyzed that UEs have the concept of including an MS (Mobile Station), a UT (User Terminal), an SS (Subscriber Station), a wireless device, and the like in GSM (Global System for Mobile Communications) as well as UEs (User Equipments) in WCDMA (Wideband Code Division Multiple Access), LTE (Long Term Evolution), HSPA (High Speed Packet Access), etc.

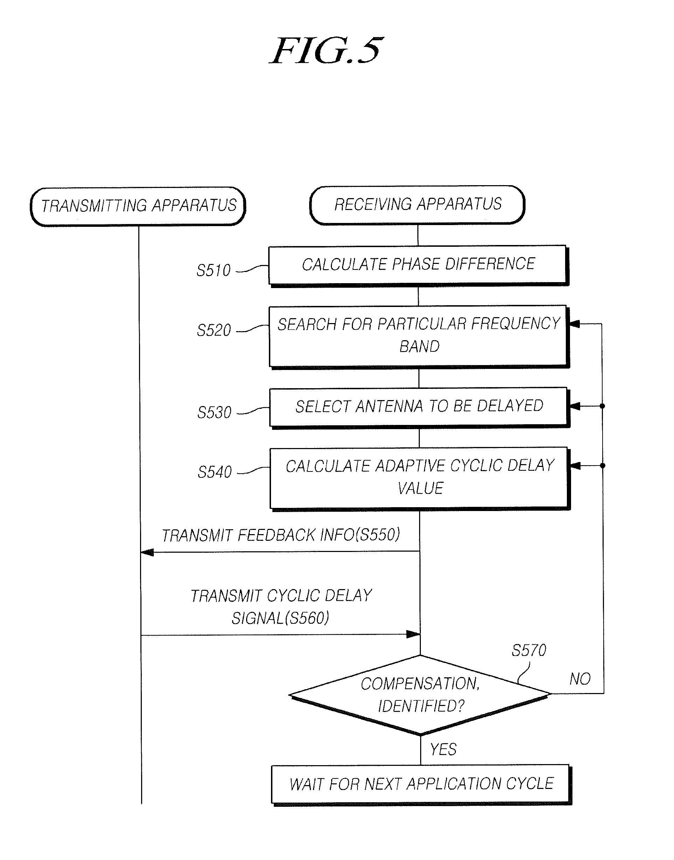

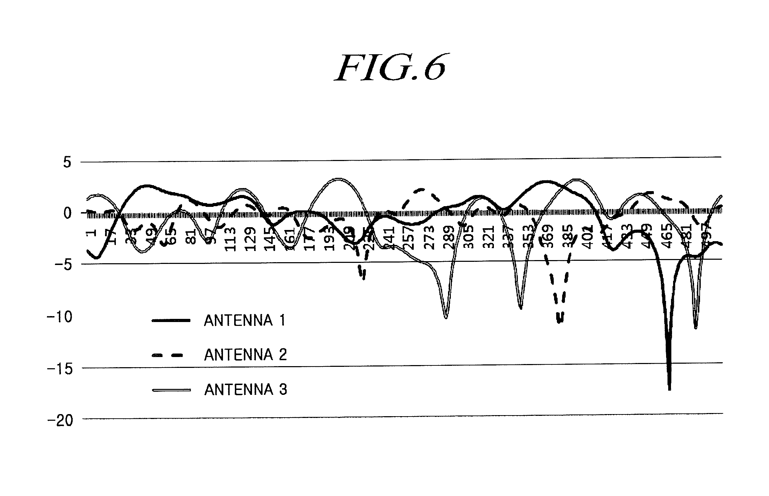

FIG. 5 is a flowchart illustrating a method for compensating for frequency attenuation for a particular frequency band by using a multi transmission antenna system according to an embodiment of the present invention, and FIGs. 6 to 8 are views illustrating changes in channel response characteristics of a multi-antenna system according to an embodiment of the present invention.

Referring to FIG. 5, a receiving apparatus according to an embodiment of the present invention, more specifically, a feedback information processor 450 of the receiving apparatus estimates a reference signal transmitted from each antenna, so as to calculate a phase difference between signals (step S510), searches for a particular frequency band which enables compensation for frequency attenuation through correction of a phase difference (step S520), selects an antenna to be delayed which enables compensation for frequency attenuation in the particular frequency band (step S530), calculates an adaptive cyclic delay value by using the particular found frequency band and the estimated reference signal (step S540), and transmits the calculated adaptive cyclic delay value and information on the antenna to be delayed to a transmitting apparatus (step S550). Then, the transmitting apparatus controls the antenna to be delayed by using the received adaptive cyclic delay value and information on the antenna to be delayed so as to transmit a signal delayed by the adaptive cyclic delay value (step S560).

Further, the operation of the feedback information processor of the receiving apparatus may further include step S570 of identifying whether compensation for frequency attenuation in a particular frequency band has been performed on a signal transmitted by a relevant base station through steps S510 through S560 as described above. When the compensation has been appropriately performed, the feedback information processor waits for the next application cycle. On the other hand, when the compensation has not been appropriately performed, the feedback information processor may return to one step among step S520 of searching for a particular frequency band, step S530 of selecting an antenna to be delayed, and step S540 of calculating an adaptive cyclic delay value.

At this time, when the compensation is not completed, whether the receiving apparatus returns to any one step may be determined in consideration of surrounding environments, such as the moving speed of the terminal (receiving apparatus), channel conditions, and frequency distortion.

As described above in relation to the receiving apparatus, the feedback information processor 450 selects a domain, where a phase difference between signals transmitted by any two antennas has a value close to π (3.14) or -π (-3.14) and simultaneously, frequency attenuation is large, as the particular frequency band in step S520 of searching for a particular frequency band and step S530 of selecting an antenna to be delayed. Then, the feedback information processor 450 selects an antenna, which generates such a phase difference, as an antenna to be delayed.

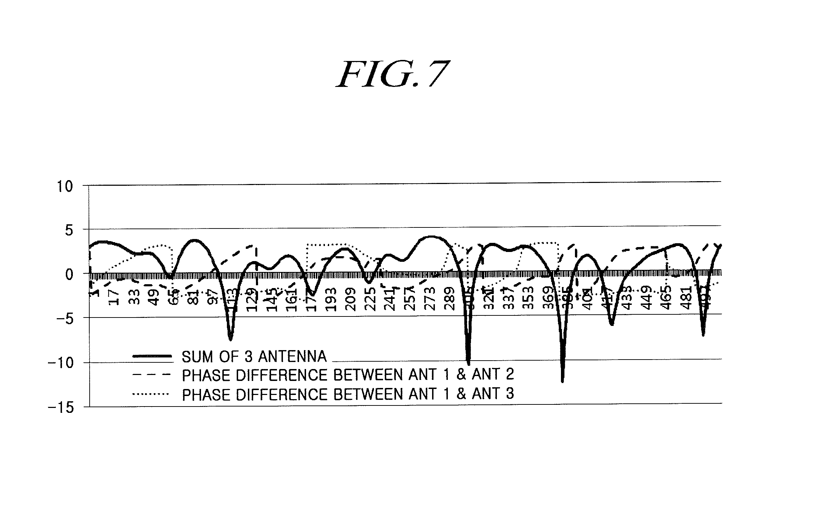

The example shown in FIG. 6 corresponds to the channel response characteristics of antenna 1 through antenna 3, and FIG. 7 shows the channel response characteristics of the receiver side and phase differences between the antennas (Ant1-Ant2 and Ant1-Ant3).

Referring to FIG. 7, near k = 385, a large frequency attenuation is generated and simultaneously, a phase difference between antenna 1 and antenna 3 comes close to +π (3.14). Accordingly, the feedback information processor of the receiving apparatus determines this frequency band as a particular frequency band which enables compensation, and selects antenna 3, which has generated such a phase difference with reference to a reference antenna, as an antenna to be delayed.

Then, the feedback information processor of the receiving apparatus calculates an adaptive cyclic delay value by equation (1) as described above in step S540 of calculating an adaptive cyclic delay value.

In equation (1), which is defined by $\delta_{cyc,n} = (2m\Pi + \Theta_k(d)) \times N_{FFT}/2\Pi k$, n represents a number of an antenna to be delayed, k represents an index of a particular frequency band, $N_{FFT}$ represents the number of sub-carriers, $\Theta_k(d)$ represents a phase difference value for which compensation is desired, and m represents an optional integer.

Namely, in FIG. 7 as an example, index k representing a particular frequency band which requires compensation is 385, an antenna to be delayed is antennas 3 (i.e. n = 3), a phase difference for which compensation is required (a phase difference value for which compensation is desired) is approximately Π (3.14). When the number $N_{FFT}$ of sub-carriers is 512, adaptive cyclic delay value $\delta_{cyc,n}$ is determined as 2 for m = 1 as defined by equation (4) below. At this time, a final phase difference value $\Theta_k(d)$ for which compensation is desired, becomes 3.16 (1.0078Π).

Then, the feedback information processor of the receiving apparatus generates a feedback signal including the calculated adaptive cyclic delay value ($\delta_{cyc,n} = 2$) and information on an antenna to be delayed (n = 3), and transmits the generated feedback signal to the transmitting apparatus.

The transmitting apparatus transmits a signal delayed by the adaptive cyclic delay value through the antenna to be delayed by using the received adaptive cyclic delay value ($\delta_{cyc,n} = 2$) and information on the antenna to be delayed (n = 3). At this time, a reference signal transmitted by the base station 1 may be expressed by equation (2) below.

$$s(l) = \frac{1}{\sqrt{N_{FFT}}} \sum_{k=0}^{N_{FFT}-1} S(k)e^{j\frac{2\pi}{N_{FFT}}kl} \qquad \cdots \cdots (2)$$

Further, the signal delayed by the adaptive cyclic delay value $\delta_{cyc,n}$ in step S560 of transmitting the cyclic delay signal may be expressed by equation (3) below.

$$s\left(\left(l - \delta_{cyc,n}\right) \bmod N_{FFT}\right) = \frac{1}{\sqrt{N_{FFT}}} \sum_{k=0}^{N_{FFT}-1} e^{-j\frac{2\pi}{N_{FFT}}k\delta_{cyc,n}} S(k) e^{j\frac{2\pi}{N_{FFT}}kl} \quad . \quad . \quad . \quad .$$

(3)

In equation (2) and equation (3), $s(l)$ and $S(k)$ represent a complex number signal on the time axis and a complex number signal on the frequency axis, respectively. k and $l$ represent indexes on the time axis and an index on the frequency axis, respectively, n represents a number of an antenna to be delayed, k represents an index of a particular frequency band, and $N_{FFT}$ represents the number of sub-carriers.

After receiving the signal delay by the adaptive cyclic delay value in ANT3, the receiving apparatus obtains the frequency response characteristic again, so as to determine whether the compensation for the frequency attenuation has been properly performed (step S570). Then, when the channel compensation has been appropriately performed, the receiving apparatus waits for the next application cycle. On the other hand, when the compensation has not been appropriately performed, the receiving apparatus may return to one step among step S520 of searching for a particular frequency band, step S530 of selecting an antenna to be delayed, and step S540 of calculating an adaptive cyclic delay value, in consideration of surrounding environments, such as the moving speed of the terminal (receiving apparatus), channel conditions, and frequency distortion.

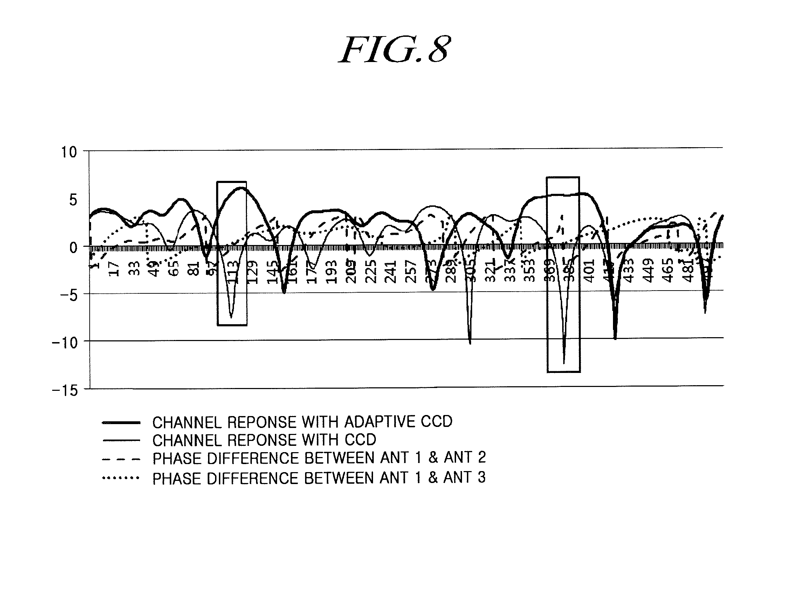

FIG. 8 illustrates frequency response characteristics at a receiver side in the case of transmitting a signal while applying an adaptive cyclic delay value to an antenna to be delayed through the process as described above. When compared with FIG. 7 obtained without the application of an embodiment of the present invention, it is noted from FIG. 8 that there is a dramatic improvement in the frequency response characteristics near k = 385, which is a particular frequency band.

Further, it is also noted from FIG. 8 that the frequency response characteristics near k = 113, which corresponds to a particular frequency band, has been improved, and this improvement corresponds to a result of an application the above-described compensation method to antenna 2 (ANT2).

Therefore, a receiving apparatus can properly select a particular frequency band, which has been unavailable, and compensate for the frequency attenuation, so as to improve the frequency selectivity and the channel response characteristics.

Meanwhile, according to an embodiment of the present invention, when a particular selected frequency band is a low frequency band (i.e. a frequency band having a low k), an adaptive cyclic delay value calculated by equation (1) as described above becomes larger. In this case, as described above, an operation similar to an operation in the large delay CDD is performed. Therefore, there is a possibility that the compensation for frequency attenuation according to an embodiment of the present invention will not be performed over a sufficient frequency band.

Namely, when an adaptive cyclic delay is performed in the frequency band having a low k, too many poles are generated as shown in FIG. 2B. Accordingly, although the method for compensating for frequency attenuation as described above is performed, it is difficult to perform a significant compensation for frequency attenuation within a desired frequency bandwidth.

When a particular desired frequency band is a low frequency band as described above, a precoding scheme may be additionally applied to the particular desired frequency band. Here, although a low frequency band, to which the precoding is applied, specifically signifies a frequency band having k equal to or smaller than $N_{FFT}/4$, the present invention is not limited to this example. The low frequency band, to which the precoding is applied, may be determined as another value based on the number of poles generated by the application of a cyclic delay, the width of a frequency band which requires compensation, etc.

Namely, a particular frequency band, which requires compensation, includes a low frequency band, the relevant transmitter side may additionally perform a precoding step of multiplying a first transmission signal by a particular precoding matrix. Although it is desirable that such a precoding step is performed before the transmission of a cyclic delay signal, the present invention is not limited to this configuration.

A precoding technology refers to a technology for increasing the reliability of the transmission of data in a multi-antenna OFDM system, etc., and is used to maximize a Signal to Noise Ratio (SNR) through the relevant feedback information in a closed loop system capable of using feedback information at a transmission end.

Particularly, a codebook-based precoding scheme may be used for the precoding technology, and is a scheme for obtaining an SNR gain by feeding an index of a precoding matrix, which a transmission/reception end already knows, back to a transmission end. In an embodiment of the present invention, when a particular selected frequency band is a low frequency band, the receiving apparatus feeds an index of an optimal precoding matrix among common precoding matrices, which the transmission/reception end has, back to a transmitter side by using channel information. Then, the transmitter side applies the precoding matrix corresponding to the fed-back index to a transmission signal.

Also, it is not true that only precoding in a closed loop can be used for the precoding technology. When a transmitter side already knows an optimal precoding matrix for a particular frequency band or for the entire frequency band, the above precoding function may be performed without feedback information.

By doing this, when a desired particular frequency band includes a low frequency band, in the low frequency band, a desired improvement in gain is obtained by using the precoding technology. In the remaining frequency band, an adaptive cyclic delay scheme according to an embodiment of the present invention compensates for frequency attenuation, so as to enable an improvement in frequency selectivity of the entire frequency band.

Although the above description has been made of an example of the 3X1 multi-antenna system, the technical idea of the present invention may be applied to an N X M multi-antenna system. In the above description, although the adaptive cyclic delay according to an embodiment of the present invention is applied only to antenna 3, the adaptive cyclic delay may be simultaneously or sequentially applied to another additional antenna or multiple antennas.

The present invention is not limited to the wireless communication field of the 3GPP (the 3rd Generation Partnership Project) series. The present invention will be able to be used in all fields, which require efficient coordinated multi-point transmission/reception, by increasing frequency selectivity all through the channel and by improving response characteristics in a particular frequency band in a multi-antenna system of another current communication field or in a multi-antenna system based on a future communication technology.

According to the embodiments of the present invention as described above, when a frequency band to be allocated frequency resources is in a state of severe frequency attenuation (pole), it is possible to control the cyclic delay value of each signal received through an antenna and then compensate for phase differences between signals, so as to achieve an improvement in channel response, in comparison with the large delay CDD scheme that obtains a gain in channel coding by increasing the frequency selectivity over the entire channel.

Therefore, even in a frequency band in which a scheduler or a subject of performing allocation of frequency resources is in a severe frequency attenuation, if a frequency response characteristic of the frequency band can be improved by using an adaptive CDD, it is possible to allocate frequency resources to the frequency band. Therefore, the present invention shows an improvement on the prior art in view of use of the frequency.

Further, according to an embodiment of the present invention, it will do if a feedback signal fed back from a receiving apparatus to a transmitting apparatus includes only the information on the antenna to be delayed and the adaptive CDD delay value. Therefore, the quantity of the information of the feedback signal is smaller than that of other feedback signals which carry detailed channel information or a typical codebook, and it is thus possible to efficiently use the feedback signal.

Industrial Applicability

According to an embodiment of the present invention as described above, a receiving side selects an antenna, to which a cyclic delay is to be applied, based on phase differences between multiple transmitting antennas, calculates an optimum adaptive cyclic delay value, and provides the calculated adaptive cyclic delay value to a transmitting side, and the transmitting side performs a cyclic delay transmission based on the provided cyclic delay value. As a result, it is possible to compensate for a frequency attenuation in a desired frequency band, so as to improve the frequency use efficiency.

CROSS-REFERENCE TO RELATED APPLICATION

This application claims priority from and the benefit under 35 U.S.C. §119(a) of Korean Patent Application No. 10-2009-0056710, filed on June 24, 2009, which is hereby incorporated by reference for all purposes as if fully set forth herein. Also, this application claims priority in countries except for the US for the same reason as described, which is hereby incorporated by reference for all purposes as if fully set forth herein.

**Claims**

1. A method for compensating for frequency attenuation in a particular frequency band by a receiving apparatus in a multi-transmission antenna system, the method comprising:

     estimating a reference signal transmitted by each antenna, and calculating a phase difference between signals;
     searching for a particular frequency band which enables compensation for frequency attenuation through correction of a phase difference;

selecting an antenna to be delayed which enables compensation for frequency attenuation in the particular frequency band;

calculating an adaptive cyclic delay value by using the particular found frequency band and the estimated reference signal;

transmitting the calculated adaptive cyclic delay value and information on the antenna to be delayed to a transmitting apparatus; and

receiving a signal delayed by the adaptive cyclic delay value with respect to the antenna to be delayed from the transmitting apparatus.

2. A method for compensating for frequency attenuation in a particular frequency band by a transmitting apparatus in a multi-transmission antenna system, the method comprising:

receiving, from a receiving apparatus, an adaptive cyclic delay value calculated based on a phase difference between signals from antennas and information on a particular frequency band which enables compensation for frequency attenuation, and information on an antenna to be delayed; and

controlling the antenna to be delayed by using the received adaptive cyclic delay value and information on the antenna to be delayed so as to transmit a signal delayed by the adaptive cyclic delay value.

3. The method as claimed in claim 1, further comprising:

identifying the compensation for the frequency attenuation in the particular frequency band, wherein when a result of the identification shows that the compensation for the frequency attenuation is not completed, the method further comprises returning to any of searching for the particular frequency band, selecting of the antenna to be delayed, and calculating of the adaptive cyclic delay value, and repeatedly performing a relevant step.

4. The method as claimed in claim 3, wherein a determination on whether to return to any of searching for the particular frequency band, selecting of the antenna to be delayed, and calculating of the adaptive cyclic delay value is made in consideration of one or more of a movement speed and channel conditions of the receiving apparatus.

5. The method as claimed in claim 1, wherein, in the searching for the particular frequency band, a domain where an absolute value of a phase difference between signals transmitted by any two antennas is equal to or larger than a particular threshold and simultaneously, frequency attenuation is large, is selected as the particular frequency band enabling the compensation for the frequency attenuation.

6. The method as claimed in claim 1, wherein, in calculating of the adaptive cyclic delay value, the adaptive cyclic delay value is determined in such a manner as to minimize a phase difference between signals transmitted by any two antennas including the antenna to be delayed in the particular found frequency band.

7. The method as claimed in claim 6, wherein the adaptive cyclic delay value($\delta_{cyc,n}$) is defined by

$$\delta_{cyc,n} = (2m\Pi + \Theta_k(d)) \times N_{FFT} / 2\Pi k \, ,$$

wherein n represents a number of the antenna to be delayed, k represents an index of a particular frequency band, $N_{FFT}$ represents the number of sub-carriers, $\Theta_k(d)$ represents a phase difference value for which compensation is desired, and m represents an optional integer.

8. The method as claimed in claim 7, wherein the smallest value among multiple adaptive cyclic delay values generated according to m is determined as an adaptive cyclic delay value.

9. The method as claimed in claim 7, wherein the phase difference value ($\Theta_k(d)$) for which compensation is desired, is equal to a value of a phase difference of received signals between the antenna to be delayed and a reference antenna or corresponds to a value which enables the adaptive cyclic delay value ($\delta_{cyc,n}$) to become an integer, and corresponds to a closest value to the phase difference of the received signals between the antenna to be delayed and the reference antenna.

**10.** The method as claimed in claim 1, further comprising, when the particular found frequency band is included in a low frequency band, multiplying the received signal by a particular precoding matrix used by the transmitting apparatus.

**11.** A receiving apparatus for compensating for frequency attenuation in a particular band, the receiving apparatus comprising a feedback information processor,
wherein the feedback information processor comprises:

a first section for estimating a reference signal transmitted by each antenna, and calculating a phase difference between signals;
a second section for searching for a particular frequency band enabling compensation for frequency attenuation through correction of a phase difference;
a third section for selecting an antenna to be delayed which enables the compensation for the frequency attenuation in the particular frequency band;
a fourth section for calculating an adaptive cyclic delay value by using information on the particular found frequency band; and
a fifth section for generating a feedback signal including the calculated adaptive cyclic delay value and information on an antenna to be delayed, and transmitting the generated feedback signal to a transmitting apparatus.

**12.** A transmitting apparatus including a multi-transmission antenna compensating for frequency attenuation in a particular frequency band, the transmitting apparatus comprising:

a reception unit for receiving an adaptive cyclic delay value ($\delta_{cyc,n}$) calculated based on a phase difference between signals from antennas and information on a particular frequency band enabling compensation for frequency attenuation, and information on an antenna to be delayed; and
a cyclic delay controller for controlling the antenna to be delayed so as to transmit a signal delayed by the adaptive cyclic delay value.

**13.** The transmitting apparatus as claimed in claim 12, wherein the signal delayed by the adaptive cyclic delay value ($\delta_{cyc,n}$) is defined by

$$s\left((l-\delta_{cyc,n})\bmod N_{FFT}\right)=\frac{1}{\sqrt{N_{FFT}}}\sum_{k=0}^{N_{FFT}-1}e^{-j\frac{2\pi}{N_{FFT}}k\delta_{cyc,n}}S(k)e^{j\frac{2\pi}{N_{FFT}}kl}\ ,$$

wherein $s(l)$ and $S(k)$ represent a complex number signal on the time axis and a complex number signal on the frequency axis, respectively, k and $l$ represent an index on the time axis and an index on the frequency axis, respectively, n represents a number of the antenna to be delayed, k represents an index of a particular frequency band, and $N_{FFT}$ represents the number of sub-carriers.

# FIG.1

EP 2 448 141 A2

# FIG.2

3 X 1 CHANNEL FREQUENCY RESPONSE

FREQUENCY RESPONSE AFTER CDD

# FIG.3

FEEDBACK SIGNAL (FROM RECEIVING APPARATUS)

EP 2 448 141 A2

EP 2 448 141 A2

# FIG.4

FEEDBACK SIGNAL (TO TRANSMITTING APPARATUS)

# FIG.5

TRANSMITTING APPARATUS          RECEIVING APPARATUS

S510 —— CALCULATE PHASE DIFFERENCE

S520 —— SEARCH FOR PARTICULAR FREQUENCY BAND

S530 —— SELECT ANTENNA TO BE DELAYED

S540 —— CALCULATE ADAPTIVE CYCLIC DELAY VALUE

TRANSMIT FEEDBACK INFO(S550)

TRANSMIT CYCLIC DELAY SIGNAL(S560)

S570

COMPENSATION, IDENTIFIED?          NO

YES

WAIT FOR NEXT APPLICATION CYCLE

## FIG.6

# FIG.7

# FIG.8

—— CHANNEL REPONSE WITH ADAPTIVE CCD
— CHANNEL REPONSE WITH CCD
– – – PHASE DIFFERENCE BETWEEN ANT 1 & ANT 2
······· PHASE DIFFERENCE BETWEEN ANT 1 & ANT 3

EP 2 448 141 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090056710